# EUROPÄISCHE PATENTSCHRIFT

(11) **EP 3 421 821 B1**
(45) Veröffentlichungstag und Bekanntmachung des Hinweises auf die Patenterteilung: **18.12.2019**
(21) Anmeldenummer: 18180054.1
(22) Anmeldetag: 27.06.2018
(51) Int. Cl.: F16B 13/00

(54) **DÜBEL, ANORDNUNG MIT EINEM DÜBEL UND VERWENDUNG EINES DÜBELS**
DOWEL, ARRANGEMENT WITH A DOWEL AND USE OF A DOWEL
CHEVILLE, DISPOSITIF DOTÉ D'UNE CHEVILLE ET UTILISATION D'UNE CHEVILLE

(30) Priorität: 30.06.2017 DE 102017211122
(43) Veröffentlichungstag der Anmeldung: 02.01.2019
(73) Patentinhaber: Adolf Würth GmbH & Co. KG, 74653 Künzelsau (DE); Würth International AG, 7000 Chur (CH)
(72) Erfinder: Frank, Uwe, 74629 Pfedelbach (DE)
(74) Vertreter: Patentanwälte Ruff, Wilhelm, Beier, Dauster & Partner mbB

(56) Entgegenhaltungen:
- EP-A1- 3 034 893
- DE-U1-202016 102 749

## Beschreibung

Die Erfindung betrifft einen Dübel zur Anordnung in Wärmedämmschichten, insbesondere an Gebäuden, mit einem Schaft, einer Bohrspitze an einem ersten Ende des Schafts, einem dem ersten Ende gegenüberliegenden zweiten Ende des Schafts und wenigstens einem Gewinde am Schaft.

Aus der deutschen Offenlegungsschrift DE 10 2013 200 682 A1 ist ein Dübel zur Anordnung in Wärmedämmschichten bekannt. Der Dübel weist einen hohlen Schaft mit einem Gewinde an der Außenseite des Schafts auf. In den hohlen Schaft des Dübels ist eine Schraube eingesetzt, wobei die Schraube mit einer elastischen Dichtscheibe versehen ist. Die Schraube ist so lang, dass sie sich über das dem Schraubenkopf abgewandte Ende des Dübels hinaus erstreckt. Um den Dübel mit der Schraube in eine Wand einzusetzen, wird also die Spitze der Schraube auf die Wand aufgesetzt. Eventuelle harte Schichten des Untergrunds werden somit mittels der Schraubenspitze durchdrungen. Der Dübelschaft mit dem Gewinde folgt erst auf die Spitze der Schraube. Das Gewinde des Dübels weist eine vergleichsweise große Flankenhöhe auf, um auch in einem weichen und elastischen Dämmstoff sicheren Halt zu finden. Der Dübel mit der Schraube ist zur Anordnung eines Abschlussblechs an einer Fassade vorgesehen.

Aus der europäischen Offenlegungsschrift EP 3 045 740 A1 ist eine Schraube zur Befestigung eines Bauteils an einem Wärmedämmverbundsystem vorgesehen. Die Schraube weist eine Bohrspitze und einen sich an die Bohrspitze anschließenden zylindrischen Schaft auf, der mit einem Gewinde versehen ist. Am Ende des zylindrischen Schafts ist ein Schraubenkopf mit einer zylindrischen Dichtscheibe angeordnet. Das Gewinde ist dafür ausgelegt, in einem elastischen Dämmstoff sicheren Halt zu finden. Die Bohrspitze, der Schraubenschaft und der Schraubenkopf sind einstückig aus Metall hergestellt, so dass kein zusätzlicher Dübel benötigt wird.

Aus der deutschen Gebrauchsmusterschrift DE 20 2016 102 749 U1 ist eine Schraube mit einer konischen Spitze und einem zylindrischen Schaft bekannt, wobei die Spitze und der Schaft mit einem Gewinde versehen sind. Das Gewinde ist zur Anordnung in einem elastischen Dämmstoff ausgelegt. An dem, der Spitze gegenüberliegenden Ende des Schafts ist ein Schraubenkopf angeordnet. Im Schraubenkopf ist eine Ausnehmung zum Einbringen einer Schraube angeordnet.

Mit der Erfindung sollen ein Dübel zur Anordnung in Wärmedämmschichten, eine Anordnung mit einem Dübel und eine Verwendung eines Dübels verbessert werden.

Erfindungsgemäß ist hierzu ein Dübel mit den Merkmalen von Anspruch 1, eine Anordnung mit den Merkmalen von Anspruch 14 bzw. eine Verwendung eines Dübels mit den Merkmalen von Anspruch 16 vorgesehen. Vorteilhafte Weiterbildungen der Erfindung sind in den Unteransprüchen angegeben.

Der erfindungsgemäße Dübel ist zur Anordnung in Wärmedämmschichten, insbesondere an Gebäuden, vorgesehen und weist einen Schaft, eine Bohrspitze an einem ersten Ende des Schafts, ein dem ersten Ende gegenüberliegendes zweites Ende des Schafts und wenigstens ein Gewinde an dem Schaft auf, wobei der Schaft einen, sich an die Bohrspitze anschließenden ersten zylindrischen Abschnitt mit einem ersten Durchmesser und einen zweiten zylindrischen Abschnitt mit einem zweiten, größeren Durchmesser aufweist, wobei der zweite Abschnitt zwischen dem ersten Abschnitt und dem zweiten Ende angeordnet ist, wobei der erste Abschnitt und der zweite Abschnitt mit dem Gewinde versehen sind und wobei ein Maximalwert der Gewindeflankenhöhe im ersten Abschnitt größer ist als im zweiten Abschnitt.

Durch eine solche Ausgestaltung des erfindungsgemäßen Dübels kann im ersten Abschnitt eine sehr große Gewindeflankenhöhe realisiert werden, um auch in einem elastischen Dämmstoff einen sicheren Halt zu gewährleisten. Im zweiten Abschnitt wird hingegen eine kleinere Gewindeflankenhöhe gewählt, so dass trotz des im zweiten Abschnitt größeren Schaftdurchmessers der Dübel noch durch eine Bohrung in einem zu befestigenden Bauteil hindurchgeschraubt werden kann. Beispielsweise ist der Dübel zum Befestigen von Abschlussblechen an Gebäudefassaden vorgesehen, wobei solche Abschlussbleche üblicherweise Bohrungen mit einem Durchmesser von 8 mm aufweisen. Der Durchmesser des Schafts im ersten Abschnitt und die Gewindeflankenhöhe im ersten Abschnitt sind nun so bemessen, dass der Dübel gerade noch durch die Bohrung mit dem Durchmesser von 8 mm hindurchgeschraubt werden kann. Im zweiten Abschnitt ist der Schaftdurchmesser vergrößert. Die Gewindeflankenhöhe wird im zweiten Abschnitt daher etwas verringert, um auch den zweiten Abschnitt noch durch die Bohrung mit dem Durchmesser von 8 mm hindurchschrauben zu können. Selbstverständlich kann die beschriebene Bemessung der Gewindeflankenhöhe und des Schaftdurchmessers im ersten und zweiten Abschnitt auch auf andere Durchmesser von Bohrungen in zu befestigenden Bauteilen abgestimmt werden. Die Bohrspitze des Dübels ist dafür vorgesehen, die Wärmedämmschicht zu durchdringen und gegebenenfalls auch auf die Wärmedämmschicht aufgebrachte Putzschichten. Der erfindungsgemäße Dübel kann dadurch ohne Vorbohren einer Wärmedämmschicht oder eines auf der Wärmedämmschicht aufgebrachten Putzes eingesetzt werden. Gegebenenfalls kann im Rahmen der Erfindung die Bohrspitze so gestaltet werden, dass auch das zu befestigende Bauteil, beispielsweise ein Abschlussblech, mittels der Bohrspitze durchdrungen werden kann. Nach dem Einsetzen des Dübels durch die Bohrung in dem zu befestigenden Bauteil, insbesondere dem Abschlussblech, wird das Bauteil durch Eindrehen einer Schraube in das zweite Ende des Dübels fixiert. Die Schraube kann dabei an der Unterseite des Kopfs mit einer elastischen Dichtscheibe versehen sein. Mit dem erfindungsgemäßen Dübel können dadurch Bauteile an wärmegedämmten Fassaden, beispielsweise Abschlussbleche, sicher befestigt werden, ohne dass sich die Befestigungsschraube bis in das hinter der Wärmedämmschicht liegende Mauerwerk erstrecken muss. Dadurch können Wärmebrücken vermieden werden.

In Weiterbildung der Erfindung ist ein Maximalwert des Außendurchmessers des Gewindes im ersten Abschnitt größer als ein Maximalwert des Außendurchmessers des Gewindes im zweiten Abschnitt.

Auf diese Weise kann sichergestellt werden, dass dann, wenn der Dübel mit seinem ersten Abschnitt gerade noch so durch ein vorgebohrtes Loch in einem zu befestigenden Bauteil geschraubt werden kann, dies dann auch im zweiten Abschnitt, in dem ja der Schaftdurchmesser größer ist als im ersten Abschnitt, der Fall ist.

In Weiterbildung der Erfindung ist ein Maximalwert einer Querabmessung des Schafts, jeweils gemessen senkrecht zu einer Mittellängsachse des Schafts von einer Kante einer Gewindeflanke zur gegenüberliegenden Schaftoberfläche, im ersten Abschnitt gleich groß oder größer als ein Maximalwert einer Querabmessung im zweiten Abschnitt.

Auf diese Weise ist sichergestellt, dass dann, wenn die Querabmessung des Schafts im ersten Abschnitt gerade so groß oder geringfügig kleiner ist als der Durchmesser einer Bohrung in einem zu befestigenden Bauteil, auch der zweite Abschnitt noch durch die Bohrung im Bauteil hindurchgeschraubt werden kann.

In Weiterbildung der Erfindung ist eine Teilung des Gewindes, also ein in Richtung der Mittellängsachse gemessener Abstand zwischen zwei Gewindeflanken, größer als oder gleich wie eine Dicke eines mittels des Dübels zu montierenden Bauteils, insbesondere eines Anschlussblechs.

Auf diese Weise kann der Dübel, wenn er durch eine Bohrung in dem zu montierenden Bauteil geschraubt wird, mit einer Gewindeflanke an der Innenseite der Bohrung anliegen und mit der, der Gewindeflanke gegenüberliegende Außenfläche des Schafts ebenfalls an der Innenseite der Bohrung. Eine maximale Querabmessung des Schafts entspricht dann dem Abstand zwischen der Kante der Gewindeflanke und der gegenüberliegenden Außenfläche des Schafts. Solange diese maximale Querabmessung kleiner oder gleich ist wie der Innendurchmesser der Bohrung in dem zu befestigenden Bauteil, kann der Dübel noch durch die Bohrung in dem Bauteil hindurchgeschraubt werden. Vorteilhafterweise wird ein eingängiges Gewinde eingesetzt, so dass sich senkrecht zur Mittellängsachse gesehen ein Punkt auf der Kante der Gewindeflanke und ein Punkt auf der Außenfläche des zylindrischen Schafts gegenüberliegen.

In Weiterbildung der Erfindung beginnt das Gewinde unmittelbar nach dem Ende der Bohrspitze.

Auf diese Weise kann nach dem Eindringen der Bohrspitze in die Wärmedämmschicht ein Vortrieb der Schraube über das Eindrehen des Gewindes bewirkt werden. Vorteilhafterweise ragt der Außendurchmesser des Gewindes unmittelbar anschließend an die Bohrspitze nicht oder nur unwesentlich über den Außendurchmesser der Bohrspitze hinaus, so dass das Gewinde problemlos in die Wandung des durch die Bohrspitze erzeugten Hohlraums hineingeschraubt werden kann.

In Weiterbildung der Erfindung steigt eine Gewindeflankenhöhe ausgehend vom Beginn des Gewindes unmittelbar nach dem Ende der Bohrspitze an.

In Weiterbildung der Erfindung weist der Schaft ein durchgehendes Gewinde auf, das, gesehen von der Bohrspitze aus, unmittelbar nach dem Ende der Bohrspitze beginnt und sich bis in den zweiten Abschnitt des Schafts erstreckt, wobei ein Außendurchmesser des Gewindes ausgehend von der Bohrspitze zunächst ansteigt, dann im weiteren Verlauf des ersten Abschnitts des Schafts konstant bleibt, im Bereich des Übergangs vom ersten Abschnitt auf den zweiten Abschnitt des Schafts absinkt und im Bereich des zweiten Abschnitts des Schafts, gegebenenfalls abgesehen von einem Endbereich des Gewindes, wieder konstant bleibt.

In Weiterbildung der Erfindung ist zwischen dem ersten Abschnitt und dem zweiten Abschnitt des Schafts ein kegelstumpfförmiger Abschnitt des Schafts angeordnet, wobei sich der Durchmesser des Schafts, gesehen von der Bohrspitze aus, im Verlauf des kegelstumpfförmigen Abschnitts vergrößert und wobei sich der Außendurchmesser des Gewindes, gesehen von der Bohrspitze aus, in dem kegelstumpfförmigen Abschnitt verringert.

In Weiterbildung der Erfindung ist eine Querabmessung des Schafts, jeweils gemessen senkrecht zu einer Mittellängsachse des Schafts, von einer Außenkante einer Gewindeflanke zur gegenüberliegenden Schaftoberfläche, abgesehen von dem Bereich des Anstiegs des Außendurchmessers des Gewindes unmittelbar anschließend an die Bohrspitze und gegebenenfalls einem Auslaufabschnitt am Ende des Gewindes, über die gesamte axiale Länge des Gewindes konstant.

In Weiterbildung der Erfindung sind am zweiten Ende des Schafts Mittel zum Aufnehmen eines Befestigungselements vorgesehen.

Beispielsweise können die Mittel als Sackloch ausgebildet sein und das Befestigungselement kann als Schraube ausgebildet sein. Nach dem Einschrauben des Dübels kann dann mittels der Schraube ein Bauteil befestigt werden.

In Weiterbildung der Erfindung ist die Bohrspitze aus einem gegenüber dem Material des übrigen Dübels härteren Material, insbesondere Metall oder Keramik, gefertigt oder Bohrschneiden der Bohrspitze sind aus härterem Material gefertigt.

Wenn beispielsweise der Dübel aus Kunststoff hergestellt ist, kann eine Bohrspitze aus härterem Material oder können Bohrschneiden aus härterem Material sicherstellen, dass der Dübel beispielsweise ohne Vorbohren durch ein Bauteil aus Metall, beispielsweise ein Abschlussblech, hindurchgeschraubt werden kann. Auch bei sehr harten Putzen oder Verkleidungen auf Wärmedämmschichten kann eine Bohrspitze aus Metall oder können Bohrschneiden aus Metall ein Eindringen des Dübels sicherstellen.

Der Dübel kann aus Zinkdruckguß hergestellt sein.

In Weiterbildung der Erfindung weist der Schaft im zweiten Abschnitt nach dem Ende des Gewindes einen kegelstumpfförmigen Zentrierabschnitt auf. Mittels eines solchen kegelstumpfförmigen Zentrierabschnitts wird der Dübel beim Einschrauben durch die Innenwand der Bohrung in dem zu befestigenden Bauteil, beispielsweise einem Abschlussblech, relativ zu der Bohrung zentriert. An den Zentrierabschnitt kann sich ein zylindrischer Abschnitt anschließen, dessen Durchmesser nur geringfügig kleiner ist als der Innendurchmesser der Bohrung. Ein solcher zylindrischer Abschnitt kann für eine weitere Zentrierung sorgen.

In Weiterbildung der Erfindung ist unmittelbar vor dem zweiten Ende des Schafts ein sich in radialer Richtung nach außen erstreckender Kragen vorgesehen, dessen Unterseite, die der Bohrspitze zugewandt ist, mit Rippen versehen ist.

Diese Rippen sind dafür vorgesehen, den Dübel gegen ein Weiterdrehen relativ zu dem zu befestigenden Bauteil zu sichern. Wird nach dem Einschrauben des Dübels in den Dübel selbst noch eine Schraube eingedreht, so verkrallen sich die Rippen in dem zu befestigenden Bauteil und verhindern das Mitdrehen des Dübels beim Einschrauben der Schraube.

Gemäß der Erfindung ist auch eine Anordnung mit einem erfindungsgemäßen Dübel und einer Schraube vorgesehen, wobei die Schraube wenigstens abschnittsweise in eine Ausnehmung im Schaft am zweiten Ende des Dübels eingeschraubt ist.

Die Ausnehmung kann beispielsweise als Sackloch ausgebildet sein und radial nach innen vorragende leistenförmige Vorsprünge aufweisen. Die Schraube schneidet sich dann ihr Gewinde selbst in die leistenförmigen Vorsprünge in der Ausnehmung hinein. Das Einschraubmoment wird dadurch verringert und es wird auch verhindert, dass der Dübel sich beim Einschrauben der Schraube mitdreht.

In Weiterbildung der Erfindung ist unter einem Kopf der Schraube eine Dichtscheibe angeordnet.

Mittels einer solchen Dichtscheibe kann beim Befestigen eines Abschlussblechs beispielsweise verhindert werden, dass Feuchtigkeit oder Schmutz in die Bohrung in dem Abschlussteil eindringt.

Gemäß der Erfindung ist auch die Verwendung eines erfindungsgemäßen Dübels oder einer erfindungsgemäßen Anordnung zum Befestigen eines Abschlussblechs an einer mit einer Wärmedämmschicht versehenen Fassade eines Gebäudes vorgesehen.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen, dargestellten Ausführungsformen können dabei ohne weiteres miteinander kombiniert werden, ohne den Rahmen der Erfindung zu überschreiten. Im Rahmen der Erfindung können auch Einzelmerkmale ohne weitere Merkmale, mit denen sie im Zusammenhang dargestellt oder beschrieben sind, mit anderen Einzelmerkmalen kombiniert werden. In den Zeichnungen zeigen:
- Fig. 1: eine Ansicht einer erfindungsgemäßen Anordnung mit einem Dübel und einer Schraube von schräg oben,
- Fig. 2: die Anordnung der Fig. 1 in auseinandergezogener Darstellung,
- Fig. 3: die Anordnung der Fig. 1 aus einem anderen Blickwinkel,
- Fig. 4: die Anordnung der Fig. 1 im montierten Zustand an der Fassade eines Gebäudes, wobei lediglich das Gebäude geschnitten dargestellt ist,
- Fig. 5: eine Schnittansicht der Anordnung der Fig. 1,
- Fig. 6: eine Schnittansicht lediglich des Dübels der Anordnung der Fig. 1,
- Fig. 7: eine Seitenansicht des Dübels der Fig. 6 aus einer ersten Blickrichtung,
- Fig. 8: den Dübel der Fig. 7 aus einer zweiten Blickrichtung,
- Fig. 9: den Dübel der Fig. 7 aus einer dritten Blickrichtung,
- Fig. 10: den Dübel der Fig. 7 in einer Schnittansicht von schräg oben,
- Fig. 11: den Dübel der Fig. 7 in einer weiteren Schnittansicht von schräg und
- Fig. 12: den Dübel der Fig. 7 in einer Draufsicht.

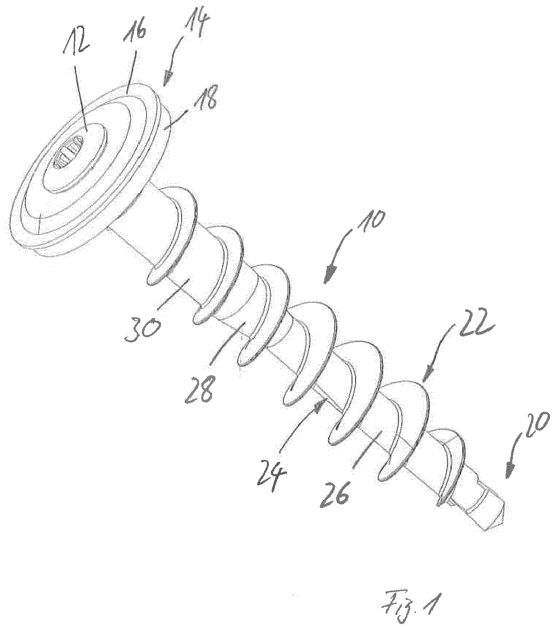

Fig. 1 zeigt eine erfindungsgemäße Anordnung mit einem Dübel 10 und einer in den Dübel eingeschraubten Schraube 12. Zwischen dem Kopf der Schraube 12 und dem Dübel 10 ist noch eine Dichtscheibe 14 angeordnet, die auf der Seite des Schraubenkopfs eine metallische Unterlegscheibe 16 und auf der Seite des Dübels eine Unterlegscheibe 18 aus elastischem Material aufweist.

Die Anordnung der Fig. 1 ist zur Befestigung von Bauteilen an Oberflächen vorgesehen, hinter denen sich Isolierschichten befinden. Solche Oberflächen werden beispielsweise durch die Fassaden von wärmegedämmten Gebäuden gebildet. Ein Mauerwerk des Gebäudes ist mit einer Isolierschicht versehen, beispielsweise einem Wärmedämmverbundsystem. Auf der Isolierschicht ist in der Regel noch eine Putzschicht angeordnet. Die Putzschicht ist gegenüber der Isolierschicht wesentlich härter. Um beim Befestigen von Bauteilen keine Wärmebrücken zwischen dem Mauerwerk und der Umgebung zu bilden, wird in der Regel angestrebt, Dübel zur Befestigung der Bauteile nicht im Mauerwerk, sondern ausschließlich in der Isolierschicht sowie dem gegebenenfalls vorhandenen Putz anzuordnen. Dies gilt insbesondere für die Anordnung von Abschlussblechen an Fassaden von Gebäuden. Zum Befestigen eines Abschlussblechs wird das Abschlussblech in der Regel vorgelocht. Der Dübel 10 wird dann durch die Bohrung im Abschlussblech hindurch in die gegebenenfalls vorhandene Putzschicht und die Isolierschicht eingeschraubt. Um die Putzschicht durchdringen zu können, ist der Dübel 10 mit einer Bohrspitze 20 versehen. Der Dübel 10 kann aus Metall oder Kunststoff bestehen. Im Falle eines Kunststoffdübels kann im Bereich der Bohrspitze ein besonders widerstandsfähiger Kunststoff vorgesehen sein oder Bohrschneiden der Bohrspitze sind aus Metall gefertigt. Es ist selbstverständlich auch möglich, lediglich die Bohrspitze 20 aus Metall zu fertigen und dann während der Herstellung des Dübels 10 das Kunststoffmaterial des Dübels 10 an die Bohrspitze 20 anzuspritzen.

Vorliegend besteht der Dübel 10 aus ZInkdruckguß.

Um in dem Isolierstoff einen sicheren Halt zu finden, ist der Dübel 10 mit einem Gewinde 22 versehen. Das Gewinde 22 weist eine vergleichsweise große Gewindeflankenhöhe auf und erstreckt sich entlang eines Schafts 24 des Dübels 10. Das Gewinde beginnt unmittelbar hinter der Bohrspitze 20 und läuft dann durch bis in einen Bereich des Schafts 24, der nur noch geringfügig von dem in Fig. 1 linken Ende des Schafts 24 entfernt ist. Das Ende des Schafts 24 mit der Bohrspitze 20 wird dabei als erstes Ende und das der Bohrspitze 20 gegenüberliegende Ende als zweites Ende des Schafts 24 bezeichnet. Das zweite Ende des Schafts ist mit einer in Fig. 1 nicht erkennbaren Ausnehmung versehen, in die die Schraube 12 eingeschraubt ist.

Bereits in der Darstellung der Fig. 1 ist zu erkennen, dass der Schaft 24 Abschnitte mit unterschiedlichem Durchmesser aufweist. Auf die Bohrspitze 20 folgt in Richtung auf das zweite Ende des Schafts 24 zu ein erster zylindrischer Abschnitt 26. Bei der dargestellten Ausführungsform hat der Schaft 24 im ersten zylindrischen Abschnitt 26 einen kreisrunden Querschnitt. Auf den ersten Abschnitt 26 folgt ein kegelstumpfförmiger Abschnitt 28. Im Verlauf des kegelstumpfförmigen Abschnitts 28 steigt der Durchmesser des Schafts 24 in Richtung auf das zweite Ende des Schafts 24 zu gesehen an. Auf den kegelstumpfförmigen Abschnitt 28 folgt ein zweiter zylindrischer Abschnitt 30, dessen Querschnitt kreisförmig ist und der einen größeren Durchmesser aufweist als der erste zylindrische Abschnitt 26. Durch den größeren Durchmesser des zweiten zylindrischen Abschnitts 30 kann im Schaft 24 die bereits erwähnte Ausnehmung zum Eindrehen der Schraube 12 angeordnet werden.

In Bezug auf das Gewinde 22 ist in Fig. 1 zu erkennen, dass die Steigung des Gewindes 22 über die gesamte Länge des Schafts 24 konstant ist. Allerdings ändert sich die Gewindeflankenhöhe des Gewindes 22 über die Länge des Schafts 24. Das Gewinde 22 beginnt unmittelbar hinter der Bohrspitze mit einer Gewindeflankenhöhe von annähernd null und steigt dann in einer ersten Zone an, die vollständig innerhalb des ersten Abschnitts 26 liegt. Am Ende der ersten Zone folgt eine zweite Zone mit einer konstanten Gewindeflankenhöhe. Diese Gewindeflankenhöhe ist, wie Fig. 1 zu entnehmen ist, vergleichsweise groß, um den Dübel 10 in einem elastischen und weichen Dämmstoff sicher verankern zu können. An die zweite Zone schließt sich am Übergang des ersten zylindrischen Abschnitts 26 zum kegelstumpfförmigen Abschnitt 28 eine dritte Zone an, in der die Gewindeflankenhöhe wieder absinkt. Die dritte Zone erstreckt sich bis zum Ende des kegelstumpfförmigen Abschnitts 28 mit dem größeren Durchmesser. Eine vierte Zone mit dann konstanter Gewindeflankenhöhe liegt dann im Bereich des zweiten zylindrischen Abschnitts 30. Innerhalb des zweiten zylindrischen Abschnitts 30 bleibt die Gewindeflankenhöhe konstant, bis das Gewinde 22 endet. Ausgehend von der Bohrspitze 20 steigt die Gewindeflankenhöhe in der ersten Zone somit zunächst an, bleibt dann im weiteren Verlauf des ersten zylindrischen Abschnitts 24 konstant auf einem vergleichsweise großen Wert, um dann in einer dritten Zone im kegelstumpfförmigen Abschnitt 28 wieder abzusinken und dann in einer vierten Zone, die im Bereich des zweiten zylindrischen Abschnitts 30 liegt, wieder konstant auf einem niedrigeren Wert zu bleiben. Ein Außendurchmesser des Gewindes 22 des Dübels 10 ist im ersten Abschnitt 26 größer als im zweiten zylindrischen Abschnitt 30.

Durch die beschriebene, sich ändernde Gewindeflankenhöhe ist es möglich, den Dübel 10 in eine Bohrung in einem zu befestigenden Bauteil, beispielsweise in einem Abschlussblech, einzuschrauben, ohne dass sich im Bereich des kegelstumpfförmigen Abschnitts 28 und im Bereich des zweiten zylindrischen Abschnitts 30 der Dübel in der Bohrung verklemmt. Denn der im kegelstumpfförmigen Abschnitt 30 ansteigende Durchmesser des Schafts 24 wird durch die in diesem Abschnitt 28 sich verringernde Gewindeflankenhöhe kompensiert. Eine Querabmessung des Schafts 24 kann dadurch beispielsweise auch im kegelstumpfförmigen Abschnitt 28 genauso groß sein wie im ersten zylindrischen Abschnitt 26. Eine Querschnittsabmessung des Schafts 24 ist dabei das Maß, das sich von der äußeren Kante der Gewindeflanke bis zu dem gegenüberliegenden Bereich der Außenfläche des zylindrischen Schafts 24 erstreckt, gemessen senkrecht zur Mittellängsachse des Dübels 10. Diese Querschnittsabmessung ist entscheidend dafür, ob sich der Dübel 10 in eine Bohrung mit vorgegebenem Durchmesser einschrauben lässt. Es wird dabei erfindungsgemäß eine möglichst große Querschnittsabmessung gewählt, um jedenfalls im ersten zylindrischen Bereich 26 eine möglichst große Gewindeflankenhöhe des Gewindes 22 zu erzielen, um den Dübel 10 sicher in einer elastischen Isolierschicht verankern zu können.

Der zweite zylindrische Abschnitt 30 weist einen gegenüber dem Durchmesser des ersten zylindrischen Abschnitts 26 größeren Durchmesser auf. Die in diesem Abschnitt niedrigere Gewindeflankenhöhe ermöglicht es, eine Querschnittsabmessung des Schafts 24 auch im zweiten zylindrischen Abschnitt unterhalb eines vordefinierten Werts zu halten, wobei dieser Wert, wie erläutert wurde, einem vordefinierten Durchmesser einer Bohrung in einem zu befestigenden Bauteil entspricht.

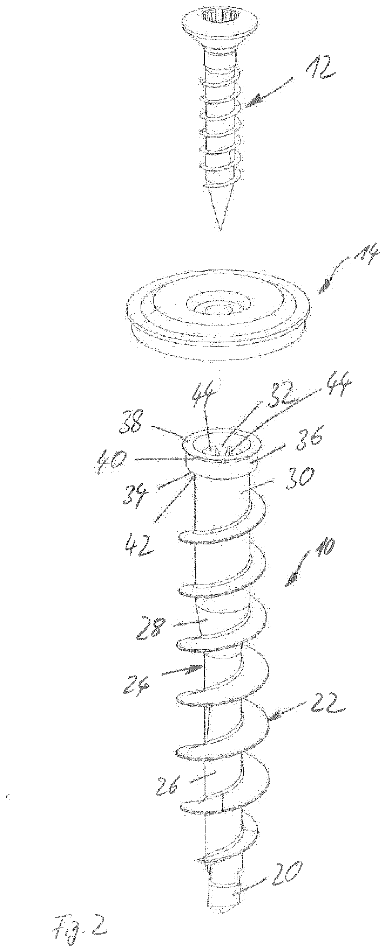

Die Darstellung der Fig. 2 zeigt die Anordnung der Fig. 1 in auseinandergezogener Darstellung. Zu erkennen ist die Schraube 12, die als konventionelle Spenglerschraube ausgebildet ist. Zwischen der Schraube 12 und dem Dübel 10 wird die Dichtscheibe 14 angeordnet. Der Dübel 10 weist in seinem in Fig. 2 erkennbaren zweiten Ende, das in Fig. 2 oben angeordnet ist, eine Ausnehmung 32 auf, in die die Schraube 12 eingeschraubt werden kann.

Es ist Fig. 2 auch zu entnehmen, dass auf den zweiten zylindrischen Abschnitt 30 ein zweiter kegelstumpfförmiger Abschnitt 34 folgt, in dem der Durchmesser des Schafts 24 noch einmal ansteigt. Der zweite kegelstumpfförmige Abschnitt 34 ist aber sehr kurz und dient lediglich als Einführhilfe, um den Dübel 10 beim Einschrauben in eine Bohrung in einem zu befestigenden Bauteil ausrichten zu können. Auf den zweiten kegelstumpfförmigen Abschnitt 34 folgt ein dritter zylindrischer Abschnitt 36 mit gegenüber dem ersten zylindrischen Abschnitt 26 und dem zweiten zylindrischen Abschnitt 30 größerem Durchmesser. Auf den dritten zylindrischen Abschnitt 36 folgt ein umlaufender Kragen 38, der einen gegenüber dem dritten zylindrischen Abschnitt 36 größeren Durchmesser aufweist. An der Unterseite des Kragens 38 sind mehrere Rippen 40 angeordnet. Die Rippen 40 stehen von der Unterseite des Kragens 38 aus in Richtung auf die Bohrspitze 20 vor und sollen ein Mitdrehen des Dübels 10 beim Einschrauben der Schraube 12 in den Dübel 10 verhindern.

Der Außendurchmesser des dritten zylindrischen Abschnitts 36 wird dabei nur unwesentlich kleiner als eine Bohrung in einem zu befestigenden Bauteil, beispielsweise einem Abschlussblech, gewählt. Typischerweise liegt der Durchmesser solcher Bohrungen in Abschlussblechen bei 8 mm. Selbstverständlich kann auch die Bohrung in dem Abschlussblech entsprechend dem Durchmesser des dritten zylindrischen Abschnitts 36 gewählt werden. Der Außendurchmesser des Kragens 38 ist dann etwas größer als der Durchmesser der Bohrung in dem zu befestigenden Bauteil. Die Rippen 40 liegen damit auf der Außenseite des zu befestigenden Bauteils an und können dadurch verhindern, dass sich der Dübel 10 beim Einschrauben der Schraube 12 in den Dübel relativ zu dem zu befestigenden Bauteil dreht.

In Fig. 2 ist auch noch ein Ende 42 des Gewindes 22 zu erkennen, das noch im Bereich des zweiten zylindrischen Abschnitts 30 und kurz vor dem zweiten kegelstumpfförmigen Abschnitt 34 angeordnet ist. Weiter sind in der Ausnehmung 32 leistenförmige Vorsprünge 44 zu erkennen, in die sich das Gewinde der Schraube 12 beim Einschrauben eingräbt.

Eine Querschnittsabmessung des Schafts 24, gemessen senkrecht zu einer Mittellängsachse des Dübels 10, ist gemäß der Erfindung infolgedessen im ersten zylindrischen Abschnitt 26, im ersten kegelstumpfförmigen Abschnitt 28 und im zweiten zylindrischen Abschnitt 30 immer kleiner oder gleich dem Durchmesser des dritten zylindrischen Abschnitts 36. Da der Durchmesser des dritten zylindrischen Abschnitts 36 nur unwesentlich kleiner ist als der Durchmesser einer Bohrung in einem zu befestigenden Bauteil, kann der Dübel 10 infolgedessen problemlos und ohne hängenzubleiben in die Bohrung des zu befestigenden Bauteils eingeschraubt werden. Dennoch kann die Gewindeflankenhöhe im Bereich des ersten zylindrischen Abschnitts 26 sehr groß gewählt werden, da der erste zylindrische Abschnitt 26 einen gegenüber dem zweiten zylindrischen Abschnitt 30 kleineren Kerndurchmesser des Schafts 24 hat.

Der erfindungsgemäße Dübel 10 kann somit einen sicheren Halt auch in elastischen Isolierschichten gewährleisten und ist dennoch für die Durchsteckmontage durch eine Bohrung in einem zu befestigenden Bauteil sehr gut geeignet.

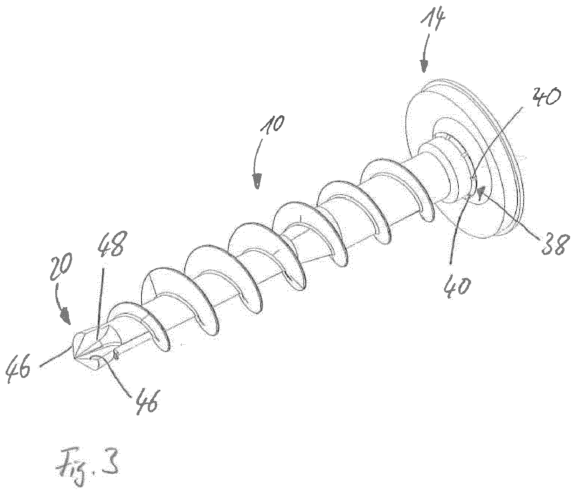

Die Darstellung der Fig. 3 zeigt die Anordnung der Fig. 1 mit dem Dübel 10, der Dichtscheibe 14 und der in Fig. 3 verdeckten Schraube 12 aus einem anderen Blickwinkel. Zu erkennen ist in dieser Ansicht der Aufbau der Bohrspitze 20 mit zwei, in einem Winkel auf eine Spitze zulaufenden Hauptschneiden 46 und zwei, einander gegenüberliegenden und von der Spitze ausgehenden Nuten 48 zum Abführen von Bohrspänen.

Darüber hinaus sind in Fig. 3 gut die Rippen 40 an der Unterseite des Kragens 38 zu erkennen. Die Rippen 40 verlaufen in radialer Richtung nach außen und ragen, wie bereits erwähnt wurde, in Richtung auf die Bohrspitze 20 von der Unterseite des Kragens 38 ab.

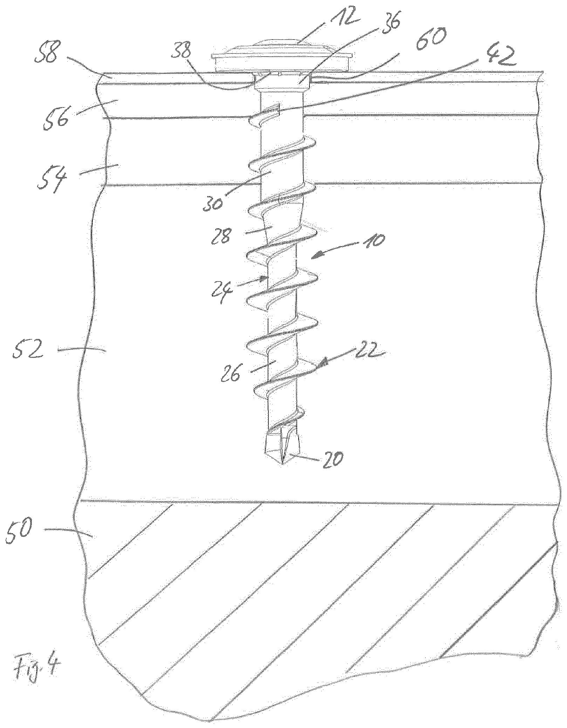

Fig. 4 zeigt in teilweise geschnittener Darstellung die Anordnung der Fig. 1 im montierten Zustand an einer Fassade eines Gebäudes. Das Gebäude weist ein Mauerwerk 50 auf, auf dessen Oberfläche eine Wärmedämmschicht 52 angeordnet ist. Die außen liegende, in Fig. 4 somit oben liegende Oberfläche der Wärmedämmschicht ist mit einer Putzschicht 54 versehen. Auf die Putzschicht 54 folgt eine Dichtbahn 56 und auf die Dichtbahn 56 dann das Abschlussblech 58. Die Dichtbahn 56 ist selbstverständlich lediglich zwischen dem Abschlussblech 58 und der Putzschicht 54 vorhanden, nicht aber in den in Fig. 4 nicht dargestellten übrigen Oberflächen des Putzes 54.

Der Dübel 10 erstreckt sich durch das Abschlussblech 58, die Dichtbahn 56, den Putz 54 und teilweise durch die Wärmedämmschicht 52. Die Bohrspitze 20 des Dübels 10 ist dabei noch vor der Oberfläche des Mauerwerks 50 angeordnet, in Fig. 4 also oberhalb des Mauerwerks 50. Zwischen dem Mauerwerk 50 und dem Abschlussblech 58 wird durch den Dübel 10 damit keine Wärmebrücke verursacht.

Der Dübel 10 kann ohne die Schraube 12 mit einem geeigneten Werkzeug, beispielsweise einem Schraubendreher, das beziehungsweise der an seinem in Fig. 4 oben liegenden Ende in eine Aufnahme für einen Antrieb des Werkzeugs beziehungsweise des Schraubendrehers greift beziehungsweise angreift, in Drehung versetzt werden. Die Bohrspitze 20 wird dann in die bereits vorhandene Bohrung 60 im Abschlussblech 58 gesetzt und durchdringt zunächst die Dichtbahn 56 und dann den Putz 54. Wie ausgeführt wurde, kann die Bohrspitze 20 aus gegenüber dem Dübel 10 härterem Material bestehen, beispielsweise aus Metall, oder die Bohrspitze 20 weist Bohrschneiden aus Metall auf. Selbstverständlich kann auch der vollständige Dübel 10 einschließlich der Bohrspitze 20 aus einem Material, beispielsweise Metall, gefertigt werden, das hart genug ist, um den Putz 54 zu durchdringen. Es ist im Rahmen der Erfindung auch möglich, den Dübel 10 aus einem Material zu fertigen bzw. mit einer Bohrspitze 20 zu versehen, die geeignet ist, das Abschlussblech oder ein sonstiges zu befestigendes Bauteil zu durchdringen. In diesem Fall kann der Dübel 10 dann sogar ohne Vorbohren oder Vorlochen des Abschlussblechs 58 eingesetzt werden.

Sobald die Bohrspitze 20 über ihre gesamte Länge in den Putz 54 eingedrungen ist, greift das Gewinde 22 in den Putz ein und sorgt für einen Vorschub des Dübels 10 in Richtung auf das Mauerwerk 50. Durch Weiterdrehen des Dübels 10 dringt die Bohrspitze 20 dann weiter durch den Putz 54 und in die Wärmedämmschicht 52 ein. Diese Vorschubbewegung wird gestoppt, sobald der Kragen 38 auf der Oberseite des Abschlussblechs 58 aufliegt. Der Dübel 10 kann dabei durch die Bohrung 60 im Abschlussblech 58 hindurchgeschraubt werden, da eine maximale Querschnittsabmessung des Schafts 24 immer geringfügig kleiner ist als der Durchmesser der Bohrung 60. So steigt anschließend an die Bohrspitze 20 die Gewindeflankenhöhe des Gewindes 22 bis auf einen Maximalwert an, der noch gewährleistet, dass die Querschnittsabmessung des Schafts 24 kleiner ist als der Durchmesser der Bohrung 60. Im ersten kegelstumpfförmigen Abschnitt 28 steigt der Kerndurchmesser des Schafts 24 an und gleichzeitig sinkt die Gewindeflankenhöhe des Gewindes 22, um die Querschnittsabmessung konstant oder kleiner als den Durchmesser der Bohrung 60 zu halten. Im zweiten zylindrischen Abschnitt 30 ist der Kerndurchmesser des Schafts 24 dann größer als der Kerndurchmesser im ersten zylindrischen Abschnitt 26. Um diesen größeren Kerndurchmesser zu kompensieren, ist die Gewindeflankenhöhe im zweiten zylindrischen Abschnitt 30 kleiner als im ersten zylindrischen Abschnitt 26, so dass also die Querschnittsabmessung des Schafts 24 bis zum Ende 42 des Gewindes kleiner ist als der Durchmesser der Bohrung 60 und infolgedessen gleich groß oder kleiner ist als der Durchmesser des dritten zylindrischen Abschnitts 36 des Dübels 10.

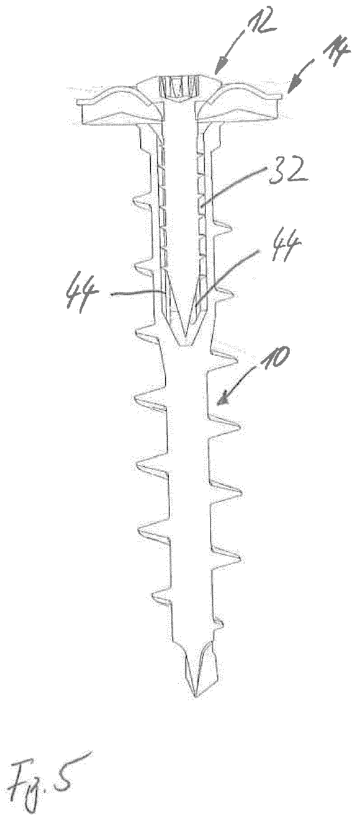

Die Darstellung der Fig. 5 zeigt eine Schnittansicht der Anordnung der Fig. 1. Gut zu erkennen ist hier die sacklochförmige Ausnehmung 32 am zweiten Ende des Dübels 10, in die die Schraube 12 eingeschraubt ist. Ein Außendurchmesser der Ausnehmung 32 ist dabei in etwa so groß wie der Außendurchmesser des Gewindes der Schraube 12. Die Gewindeflanken des Gewindes der Schraube 12 greifen, wie erläutert wurde, lediglich in die leistenförmigen Vorsprünge 44 an der Innenseite der Ausnehmung 32 ein.

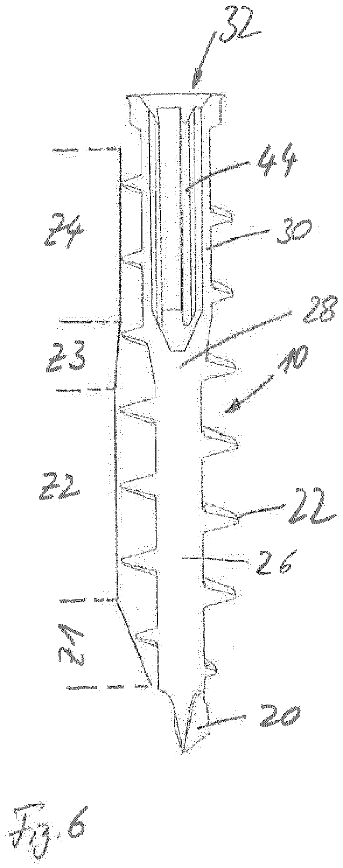

Fig. 6 zeigt den Dübel 10 in einer Schnittansicht entsprechend der Fig. 5, wobei die Schraube 2 und die Dichtscheibe 14 weggelassen sind. In dieser Ansicht ist einer der leistenförmigen Vorsprünge 44 in der Ausnehmung 32 gut zu erkennen. Weiter sind in Fig. 6 die vier Zonen mit sich verändernder Gewindeflankenhöhe des Gewindes 22 eingezeichnet, die bereits erläutert wurden. Unmittelbar oberhalb bzw. hinter der Bohrspitze 20 beginnt das Gewinde 22 mit einer Gewindehöhe von annähernd null und steigt in einer ersten Zone Z1 dann auf eine maximale Gewindeflankenhöhe an. Die maximale Gewindeflankenhöhe, die in Bezug auf eine sichere Verankerung des Dübels 10 in einer Wärmedämmschicht ausgelegt ist, bleibt dann in einer zweiten Zone Z2 konstant. Über den ersten kegelstumpfförmigen Abschnitt 28 sinkt die Gewindeflankenhöhe dann in einer dritten Zone Z3 wieder ab. Im Bereich des zweiten zylindrischen Abschnitts 30 bleibt die Gewindeflankenhöhe dann in einer Zone Z4 bis zum Ende des Gewindes 22 konstant. Ein Außendurchmesser des Gewindes 22 des Dübels 10 ist in der zweiten Zone Z2 größer als in der vierten Zone Z4.

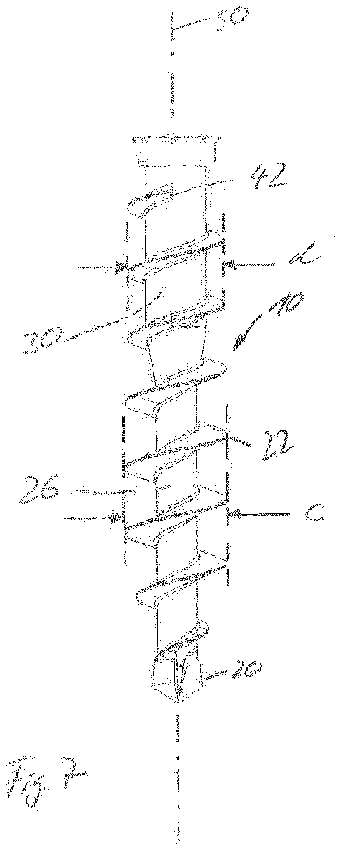

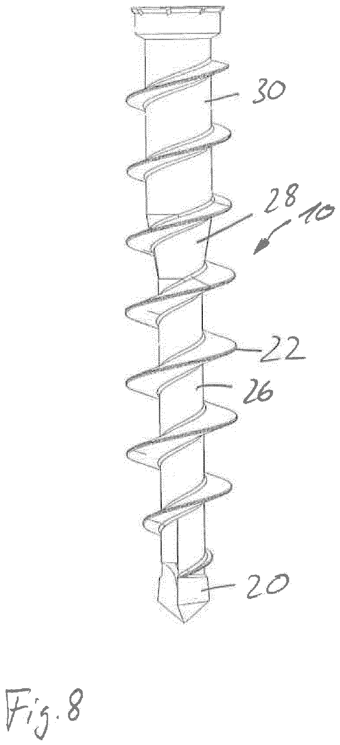

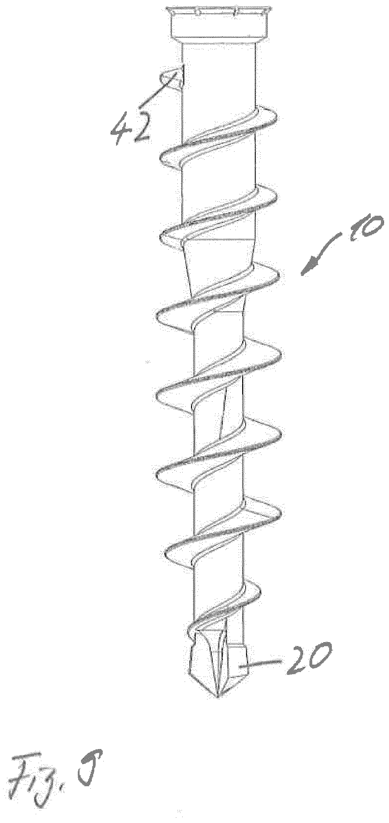

Die Darstellungen der Fig. 7, Fig. 8 und Fig. 9 zeigen den Dübel 10 jeweils in einer Seitenansicht unter unterschiedlichen Betrachtungswinkeln. In diesen Ansichten ist die Ausbildung der Bohrspitze 20 sowie auch des Gewindes 22 gut zu erkennen. So sieht man in Fig. 7 und Fig. 8, dass das Gewinde 22 unmittelbar oberhalb bzw. hinter der Bohrspitze 20 beginnt und die Gewindeflankenhöhe dann innerhalb von etwa 1,5 Umläufen auf den Maximalwert ansteigt. Die Gewindeflankenhöhe bleibt dann bis zum Ende des ersten zylindrischen Abschnitts 26 über etwas mehr als drei Umläufe konstant. Im Verlauf des ersten kegelstumpfförmigen Abschnitts 28 sinkt die Gewindeflankenhöhe dann über etwa einen Umlauf ab. Im zweiten zylindrischen Abschnitt 30 bleibt die Gewindeflankenhöhe dann über etwa drei Umläufe konstant, um dann am Ende 42 abrupt auf null zu gehen. In Fig. 7 ist zu erkennen, dass der maximale Außendurchmesser c des Gewindes 22 im ersten zylindrischen Abschnitt 26 größer ist als der maximale Außendurchmesser a im zweiten zylindrischen Abschnitt 30.

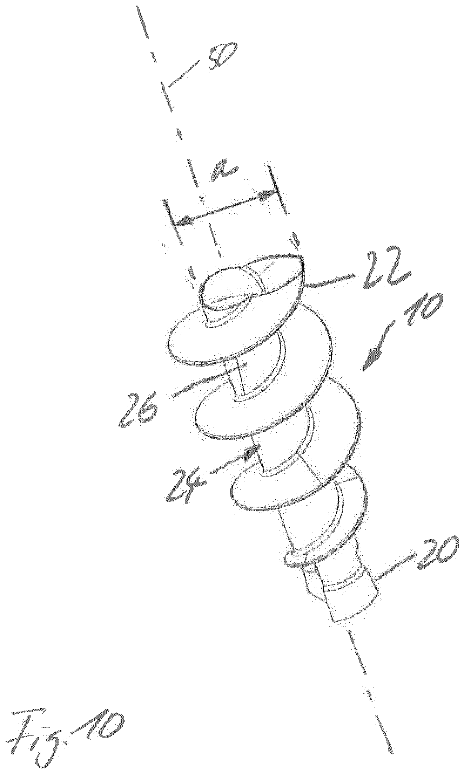

Die Darstellung der Fig. 10 zeigt eine Schnittansicht des Dübels 10, wobei die Schnittebene senkrecht zu einer Mittellängsachse 50 des Dübels 10 liegt und in Fig. 10 im ersten zylindrischen Abschnitt 26 und im Bereich der maximalen Gewindeflankenhöhe des Gewindes 22 angeordnet ist. Eingezeichnet ist in Fig. 10 eine maximale Querschnittsabmessung a, also eine Länge von der Kante der Gewindeflanke des Gewindes 22 bis zum gegenüberliegenden Punkt der Außenfläche des Schafts 24. Diese maximale Querschnittsabmessung a entspricht der Summe des Kerndurchmessers des Schafts 24 und der Gewindeflankenhöhe des Gewindes 22.

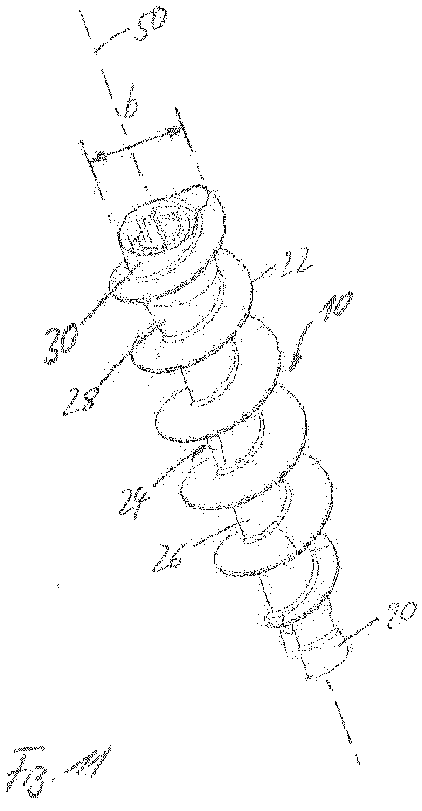

In Fig. 11 ist eine weitere Querschnittsansicht des Dübels 10 dargestellt, wobei die Schnittebene hier senkrecht zur Mittellängsachse 50 in den zweiten zylindrischen Bereich 30 gelegt wurde. Eine maximale Querschnittsabmessung b ist hier wieder von der äußeren Kante der Gewindeflanke des Gewindes 22 bis zum gegenüberliegenden Punkt auf der Außenfläche des Schafts 24 eingetragen. Auch hier entspricht die maximale Querschnittsabmessung b dem Kerndurchmesser des Schafts 24 im zweiten zylindrischen Abschnitt 30 zuzüglich der Gewindeflankenhöhe des Gewindes 22 in diesem zweiten zylindrischen Abschnitt 30.

Die Querschnittsabmessungen a, b sind vorzugsweise gleich groß, so dass also der größere Durchmesser im zweiten zylindrischen Abschnitt 30 durch eine verringerte Gewindeflankenhöhe des Gewindes 22 kompensiert wird. Die maximalen Querschnittsabmessungen a, b sind aber in jedem Fall etwas kleiner als der Durchmesser einer Bohrung 60 in einem zu montierenden Bauteil bzw. Abschlussblech 58, vgl. Fig. 4, und gleich groß oder kleiner als der Durchmesser des dritten zylindrischen Abschnitts 36 des Dübels 10, siehe wieder Fig. 4. Auf diese Weise lässt sich der Dübel 10 problemlos in eine Bohrung mit vordefiniertem Durchmesser einschrauben und dennoch kann eine Gewindeflankenhöhe so groß gewählt werden, dass eine sichere Verankerung des Dübels in einer Wärmedämmschicht sichergestellt ist.

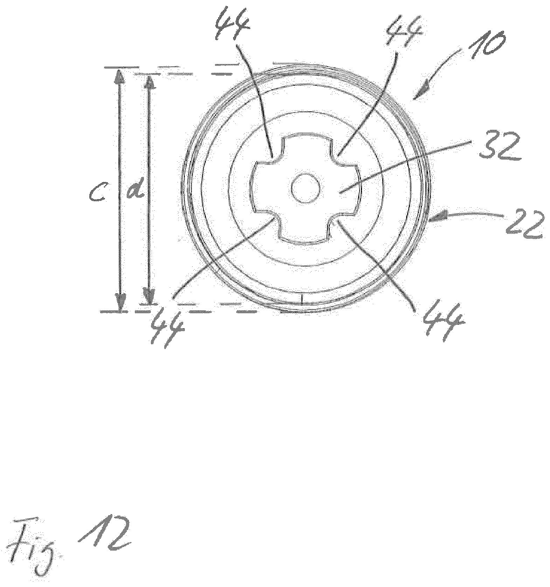

Die Darstellung der Fig. 12 zeigt eine Ansicht des Dübels 10 von oben. Der Blick geht hier in die Ausnehmung 32 hinein. Gut zu erkennen sind insgesamt vier leistenförmige Vorsprünge 44, die radial nach innen in die Ausnehmung 32 vorragen. Beim Einschrauben der Schraube 12 graben sich die Gewindeflanken der Schraube 12 in das Material der leistenförmigen Vorsprünge 44 ein. Außerhalb der leistenförmigen Vorsprünge 44 ist eine Querschnittsabmessung der Ausnehmung 32 etwa so groß oder geringfügig größer als der Außendurchmesser der Schraube 12. Das Einschraubmoment der Schraube 12 wird dadurch wesentlich verringert und ein Mitdrehen des Dübels 10 beim Einschrauben der Schraube 12 wird verhindert.

In der Darstellung der Fig. 12 ist auch der maximale Außendurchmesser c des Gewindes 22 im Bereich des ersten zylindrischen Abschnitts 26 eingezeichnet und der maximale Außendurchmesser d des Gewindes 22 im Bereich des zweiten zylindrischen Abschnitts 30. Es ist leicht zu erkennen, dass der Außendurchmesser c größer ist als der Außendurchmesser d. Die Außendurchmesser c und d sind der Übersichtlichkeit halber zusätzlich auch in Fig. 7 eingetragen.

Der Dübel 10 (ohne eine in diesen eingesetzte Spenglerschraube) kann somit mittels eines Werkzeugs in eine Wärmedämmschicht 52 eingeschraubt werden oder der Dübel 10 (mit einer in diesen eingesetzten Spenglerschraube) kann mittels eines Werkzeugs in eine Wärmedämmschicht 52 eingeschraubt werden, wobei im ersten Fall das Werkzeug am Dübel 10 direkt angreift und im zweiten Fall an der Spenglerschraube angreift.

## Patentansprüche

1. Dübel (10) zur Anordnung in Wärmedämmschichten (52), insbesondere an Gebäuden, mit einem Schaft (24), einer Bohrspitze (20) an einem ersten Ende des Schafts (24), einem dem ersten Ende gegenüberliegenden zweiten Ende des Schafts (24) und wenigstens einem Gewinde (22) am Schaft (24), **dadurch gekennzeichnet, dass** der Schaft (24) einen, sich an die Bohrspitze (20) anschließenden ersten zylindrischen Abschnitt (26) mit einem ersten Durchmesser und einen zweiten zylindrischen Abschnitt (30) mit einem zweiten, größeren Durchmesser aufweist, wobei der zweite Abschnitt (30) zwischen dem ersten Abschnitt (26) und dem zweiten Ende angeordnet ist, wobei der erste Abschnitt (26) und der zweite Abschnitt (30) mit dem Gewinde (22) versehen sind und wobei ein Maximalwert der Gewindeflankenhöhe im ersten Abschnitt (26) größer ist als im zweiten Abschnitt (30).

2. Dübel nach Anspruch 1, **dadurch gekennzeichnet, dass** ein Maximalwert des Außendurchmessers (C) des Gewindes (22) im ersten Abschnitt (26) größer ist als ein Maximalwert des Außendurchmessers (α) des Gewindes (22) im zweiten Abschnitt (30).

3. Dübel nach Anspruch 1 oder 2, **dadurch gekennzeichnet, dass** ein Maximalwert einer Querabmessung (α) des Schafts (24), jeweils gemessen senkrecht zu einer Mittellängsachse des Schafts von einer Kante einer Gewindeflanke zur gegenüberliegenden Schaftoberfläche, im ersten Abschnitt (26) gleich groß oder größer ist als ein Maximalwert einer Querabmessung (b) im zweiten Abschnitt (30).

4. Dübel nach einem der vorstehende Ansprüche, **dadurch gekennzeichnet, dass** eine Teilung des Gewindes (22), also ein in Richtung der Mittellängsachse gemessener Abstand zwischen zwei Gewindeflanken, größer ist als oder gleich ist wie eine Dicke eines mittels des Dübels zu montierenden Bauteils, insbesondere eines Anschlussblechs (58).

5. Dübel nach wenigstens einem der vorstehenden Ansprüche, **dadurch gekennzeichnet, dass** das Gewinde (22) unmittelbar nach dem Ende der Bohrspitze (20) beginnt.

6. Dübel nach Anspruch 5, **dadurch gekennzeichnet, dass** eine Gewindeflankenhöhe ausgehend vom Beginn des Gewindes (22) unmittelbar nach dem Ende der Bohrspitze (20) ansteigt.

7. Dübel nach wenigstens einem der vorstehenden Ansprüche, wobei der Schaft (24) ein durchgehendes Gewinde (22) aufweist, das, gesehen von der Bohrspitze (20) aus, unmittelbar nach dem Ende der Bohrspitze (20) beginnt und sich bis in den zweiten zylindrischen Abschnitt (30) des Schafts (24) erstreckt, wobei ein Außendurchmesser des Gewindes (22) ausgehend von der Bohrspitze (20) zunächst ansteigt, dann im weiteren Verlauf des ersten zylindrischen Abschnitts (26) des Schafts (24) konstant bleibt, im Bereich des Übergangs vom ersten Abschnitt (26) auf den zweiten Abschnitt (30) des Schafts (24) absinkt und im Bereich des zweiten Abschnitts (30) des Schafts (24), gegebenenfalls abgesehen von einem Endbereich des Gewindes (22), wieder konstant bleibt.

8. Dübel nach Anspruch 7, **dadurch gekennzeichnet, dass** zwischen dem ersten zylindrischen Abschnitt (26) und dem zweiten zylindrischen Abschnitt (30) des Schafts (24) ein kegelstumpfförmiger Abschnitt (28) des Schafts (24) angeordnet ist, wobei sich der Durchmesser des Schafts (24), gesehen von der Bohrspitze (20) aus, im Verlauf des kegelstumpfförmigen Abschnitts (28) vergrößert und wobei sich der Außendurchmesser des Gewindes (22), gesehen von der Bohrspitze (20) aus, in dem kegelstumpfförmigen Abschnitt (28) vorzugsweise verringert.

9. Dübel nach Anspruch 7 oder 8, **dadurch gekennzeichnet, dass** eine Querabmessung (a, b) des Schafts (24), jeweils gemessen senkrecht zu einer Mittellängsachse des Schafts (24) von einer Außenkante einer Gewindeflanke zur gegenüberliegenden Schaftoberfläche, abgesehen von dem Bereich des Anstiegs des Außendurchmessers des Gewindes (22) unmittelbar anschließend an die Bohrspitze (20) und gegebenenfalls einem Auslaufabschnitt am Ende des Gewindes (22), über die gesamte Länge des Gewindes (22) konstant ist.

10. Dübel nach wenigstens einem der vorstehenden Ansprüche, **dadurch gekennzeichnet, dass** am zweiten Ende des Schafts (24) Mittel zum Aufnehmen eines Befestigungselements vorgesehen sind, insbesondere einer Spenglerschraube.

11. Dübel nach wenigstens einem der vorstehenden Ansprüche, **dadurch gekennzeichnet, dass** die Bohrspitze (20) aus einem gegenüber dem Material des übrigen Dübels härterem Material, insbesondere Metall oder Keramik, gefertigt ist oder Bohrschneiden der Bohrspitze (20) aus härterem Material gefertigt sind.

12. Dübel nach wenigstens einem der vorstehenden Ansprüche, **dadurch gekennzeichnet, dass** der Schaft (24) nach dem Ende (42) des Gewindes (22) einen kegelstumpfförmigen Zentrierabschnitt (34) aufweist.

13. Dübel nach wenigstens einem der vorstehenden Ansprüche, **dadurch gekennzeichnet, dass** unmittelbar vor dem zweiten Ende des Schafts (24) ein sich in radialer Richtung nach außen erstreckender Kragen (38) vorgesehen ist, dessen Unterseite, die der Bohrspitze (20) zugewandt ist, insbesondere mit Rippen (40) versehen ist.

14. Anordnung **gekennzeichnet durch** einen Dübel (10) nach einem der vorstehenden Ansprüche und eine Schraube (12), wobei die Schraube (12) wenigstens abschnittsweise in eine Ausnehmung (32) im Schaft (24) am zweiten Ende des Dübels (10) eingeschraubt ist.

15. Anordnung nach Anspruch 14, **dadurch gekennzeichnet, dass** unter einem Kopf der Schraube (12) eine Dichtscheibe (14) angeordnet ist.

16. Verwendung eines Dübels (10) oder einer Anordnung nach wenigstens einem der vorstehenden Ansprüche zum Befestigen eines Abschlussbleches (58) an einer mit einer Wärmedämmschicht (52) versehenen Fassade eines Gebäudes.

## Claims

1. Anchor (10), for purposes of arrangement in thermal insulation layers (52), in particular on buildings, with a shank (24), a drill tip (20) at a first end of the shank (24), a second end of the shank (24) located opposite to the first end, and at least one thread (22) on the shank (24),
**characterised in that**,
the shank (24) has a first cylindrical section (26) with a first diameter, adjoining the drill tip (20), and a second cylindrical section (30) with a second, larger diameter, wherein
the second section (30) is arranged between the first section (26) and the second end, wherein
the first section (26) and the second section (30) are provided with the thread (22), and wherein
a maximum value of the thread flank height is greater in the first section (26) than in the second section (30) .

2. Anchor according to Claim 1,
**characterised in that**,
a maximum value of the outer diameter (C) of the thread (22) in the first section (26) is greater than a maximum value of the outer diameter (a) of the thread (22) in the second section (30).

3. Anchor according to Claim 1 or 2,
**characterised in that**,
a maximum value of a transverse dimension (a) of the shank (24), in each case measured at right angles to a central longitudinal axis of the shank from an edge of a thread flank to the oppositely located shank surface, in the first section (26) is equal to or greater than a maximum value of a transverse dimension (b) in the second section (30).

4. Anchor according to one of the preceding claims,
**characterised in that**,
a pitch of the thread (22), that is to say, a distance measured in the direction of the central longitudinal axis between two thread flanks, is greater than or equal to a thickness of a component to be mounted by means of the anchor, in particular a closure plate (58) .

5. Anchor according to at least one of the preceding claims,
**characterised in that**,
the thread (22) starts immediately after the end of the drill tip (20).

6. Anchor according to Claim 5,
**characterised in that**,
a thread flank height, originating from the start of the thread (22), increases immediately after the end of the drill tip (20).

7. Anchor according to at least one of the preceding claims, wherein
the shank (24) has a continuous thread (22), which, viewed from the drill tip (20), starts immediately after the end of the drill tip (20), and extends into the second cylindrical section (30) of the shank (24), wherein
an outer diameter of the thread (22), originating from the drill tip, initially increases (20), then remains constant in the further course of the first cylindrical section (26) of the shank (24), decreases in the region of the transition from the first section (26) to the second section (30) of the shank (24), and again remains constant in the region of the second section (30) of the shank (24), possibly apart from an end region of the thread (22).

8. Anchor according to Claim 7,
**characterised in that**,
between the first cylindrical section (26) and the second cylindrical section (30) of the shank (24) a truncated cone-shaped section (28) of the shank (24) is arranged, wherein
the diameter of the shank (24), viewed from the drill tip (20), increases in the course of the truncated cone-shaped section (28), and wherein
the outer diameter of the thread (22), viewed from the drill tip (20), preferably decreases in the truncated cone-shaped section (28).

9. Anchor according to Claim 7 or 8,
**characterised in that**,
a transverse dimension (a, b) of the shank (24), in each case measured at right angles to a central longitudinal axis of the shank (24), from an outer edge of a thread flank to the oppositely located shank surface, is constant over the entire length of the thread (22), apart from the region of increase of the outer diameter of the thread (22) immediately adjacent to the drill tip (20), and possibly a run-out section at the end of the thread (22).

10. Anchor according to at least one of the preceding claims,
**characterised in that**,
at the second end of the shank (24), means are provided for receiving a fastening element, in particular a spengler screw.

11. Anchor according to at least one of the preceding claims,
**characterised in that**,
the drill tip (20) is made of a material that is harder than the material of the rest of the anchor, in particular a metal or ceramic, or drill cutting edges of the drill tip (20) are made of a harder material.

12. Anchor according to at least one of the preceding claims,
**characterised in that**,
the shank (24) has a truncated cone-shaped centring section (34) after the end (42) of the thread (22).

13. Anchor according to at least one of the preceding claims,
**characterised in that**,
immediately before the second end of the shaft (24), a collar (38) is provided, which extends outwards in the radial direction, and whose underside, which faces the drill tip (20), is in particular provided with ribs (40) .

14. Arrangement,
**characterised by**,
an anchor (10) according to one of the preceding claims, and a screw (12), wherein
at least some sections of the screw (12) are screwed into a recess (32) in the shank (24) at the second end of the anchor (10).

15. Arrangement according to Claim 14,
**characterised in that**,
a sealing washer (14) is arranged under a head of the screw (12).

16. Use of an anchor (10) or an arrangement according to at least one of the preceding claims,
for purposes of fastening a closure plate (58) to a facade of a building, provided with a thermal insulation layer (52).

## Revendications

1. Cheville (10), destinée à être placée dans des couches d'isolation thermique (52), notamment sur des bâtiments, pourvue d'une tige (24), d'une pointe taraudeuse (20) sur une première extrémité de la tige (24), d'une deuxième extrémité de la tige (24) opposée à la première extrémité et d'au moins un filetage (22) sur la tige (24), **caractérisée en ce que** la tige (24) comporte un premier tronçon cylindrique (26) se raccordant sur la pointe taraudeuse (20) présentant un premier diamètre et un deuxième tronçon cylindrique (30) présentant un deuxième diamètre plus important, le deuxième tronçon (30) étant placé entre le premier tronçon (26) et la deuxième extrémité, le premier tronçon (26) et le deuxième tronçon (30) étant munis du filetage (22) et une valeur maximale de la hauteur du flanc de filet étant plus élevée dans le premier tronçon (26) que dans le deuxième tronçon (30).

2. Cheville selon la revendication 1, **caractérisée en ce qu'**une valeur maximale du diamètre extérieur (C) du filetage (22) dans le premier tronçon (26) est supérieure à une valeur maximale du diamètre extérieur (a) du filetage (22) dans le deuxième tronçon (30).

3. Cheville selon la revendication 1 ou 2, **caractérisée en ce qu'**une valeur maximale d'une dimension transversale (a) de la tige (24), mesurée respectivement à la perpendiculaire d'un axe médian longitudinal de la tige, d'une arête d'un flanc de filetage vers la surface opposée de la tige dans le premier tronçon (26) est supérieure ou égale à une valeur maximale d'une dimension transversale (b) dans le deuxième tronçon (30).

4. Cheville selon l'une quelconque des revendications précédentes, **caractérisée en ce qu'**une division du filetage (22), donc un écart entre deux flancs de filetage mesuré dans la direction de l'axe médian longitudinal est supérieure ou égale à une épaisseur d'un élément structurel qui doit être monté au moyen de la cheville, notamment d'une tôle de raccordement (58) .

5. Cheville selon au moins l'une quelconque des revendications précédentes, **caractérisée en ce que** le filetage (22) commence directement après l'extrémité de la pointe taraudeuse (20).

6. Cheville selon la revendication 5, **caractérisée en ce qu'**une hauteur du flanc de filet en partant du commencement du filetage (22) s'accroît directement après l'extrémité de la pointe taraudeuse (20).

7. Cheville selon au moins l'une quelconque des revendications précédentes, la tige (24) comportant un filetage (22) continu, qui considéré à partir de la pointe taraudeuse (20) commence directement après l'extrémité de la pointe taraudeuse (20) et s'étend jusque dans le deuxième tronçon cylindrique (30) de la tige (24), un diamètre extérieur du filetage (22) en partant de la pointe taraudeuse (20) s'accroissant d'abord, puis restant constant dans le trajet suivant du premier tronçon cylindrique (26) de la tige (24), décroissant dans la zone du passage du premier tronçon (26) dans le deuxième tronçon (30) de la tige (24) et restant à nouveau constant dans la zone du deuxième tronçon (30) de la tige (24), le cas échéant à l'exception d'une zone d'extrémité du filetage (22).

8. Cheville selon la revendication 7, **caractérisée en ce qu'**entre le premier tronçon cylindrique (26) et le deuxième tronçon cylindrique (30) de la tige (24) est placé un tronçon tronconique (28) de la tige (24), le diamètre de la tige (24), considéré à partir de la pointe taraudeuse (20) s'agrandissant dans le trajet du tronçon tronconique (28) et le diamètre extérieur du filetage (22), considéré à partir de la pointe taraudeuse (20) se réduisant de préférence dans le tronçon tronconique (28).

9. Cheville selon la revendication 7 ou 8, **caractérisée en ce qu'**une dimension transversale (a, b) de la tige (24), mesurée respectivement à la perpendiculaire d'un axe médian longitudinal de la tige (24), d'une arête extérieure d'un flanc de filetage vers la surface opposée de la tige, à l'exception de la zone de croissance du diamètre extérieur du filetage (22), en raccordement direct sur la pointe taraudeuse (20) et le cas échéant d'un segment de sortie sur l'extrémité du filetage (22) est constante sur toute la longueur du filetage (22).

10. Cheville selon au moins l'une quelconque des revendications précédentes, **caractérisée en ce que** sur la deuxième extrémité de la tige (24) sont prévus des moyens destinés à recevoir un élément de fixation, notamment une vis étanche.

11. Cheville selon au moins l'une quelconque des revendications précédentes, **caractérisée en ce que** la pointe taraudeuse (20) est fabriquée en une matière plus dure que la matière du reste de la cheville, notamment en métal ou en céramique ou **en ce que** des taillants de la pointe taraudeuse (20) sont fabriqués en une matière plus dure.

12. Cheville selon au moins l'une quelconque des revendications précédentes, **caractérisée en ce qu'**après l'extrémité (42) du filetage (22), la tige (24) comporte un tronçon de centrage tronconique (34).

13. Cheville selon au moins l'une quelconque des revendications précédentes, **caractérisée en ce que** directement à l'avant de la deuxième extrémité de la tige (24), il est prévu un collet (38), s'étendant vers l'extérieur en direction radiale, dont la face inférieure qui est dirigée vers la pointe taraudeuse (20) est munie notamment de nervures (40).

14. Ensemble, **caractérisé par** une cheville (10) selon l'une quelconque des revendications précédentes et par une vis (12), la vis (12) étant vissée au moins par tronçon dans un évidement (32) dans la tige (24), sur la deuxième extrémité de la cheville (10).

15. Ensemble selon la revendication 14, **caractérisé en ce que** sous une tête de la vis (12) est placée une rondelle d'étanchéité (14).

16. Utilisation d'une cheville (10) ou d'un ensemble selon au moins l'une quelconque des revendications précédentes pour la fixation d'une tôle de terminaison (58) sur une façade de bâtiment munie d'une couche d'isolation thermique (52).
